# EUROPEAN PATENT SPECIFICATION

(11) **EP 0 612 984 B1**
(45) Date of publication and mention of the grant of the patent: **08.07.1998**
(21) Application number: 94890041.0
(22) Date of filing: 16.02.1994
(51) Int. Cl.: G01G 13/10

(54) **Procedure for precise weighing of powder materials on air conveying packing machines**
Verfahren zum genauen Wiegen von pulverigen Materialien in luftfördernden Abfüllmaschinen
Procédé pour peser exactement des matériaux pulvérulent sur des machines de remplissage à transport pneumatique

(30) Priority: 25.02.1993 HR 930232
(43) Date of publication of application: 31.08.1994
(73) Proprietor: Rodin, Davor, HR-58216 Kastel Stari (HR)
(72) Inventor: Rodin, Davor, HR-58216 Kastel Stari (HR)
(74) Representative: Miksovsky, Alexander, Dipl.-Ing.

(56) References cited:
- EP-A- 0 221 367
- DE-A- 2 949 298
- DE-A- 3 026 084
- FR-A- 2 413 297
- FR-A- 2 492 975

## Description

The present invention relates to a procedure for a precise weighing of powder materials on air conveying packing machines with a fluidization of the material in a bulk storage from which the material is packed in at least two stages with different quantities of flow of the material.

The standard powder weighing procedure on air conveying packing machines is normally carried out in two filling stages: rough and fine.

A procedure for a precise weighing of powder materials can be gathered from EP-A 0 221 367, for example. With this known procedure an opening of a metering means is predefined and a further parameter can be varied according to the weight increase during a period of time, wherein two filling stages are provided.

Another weighing system with at least two filling stages can be taken from DE-A 30 26 084, wherein the weighing means comprises vibrating strings being differently charged during the filling procedure. This known system aims particularly at allowing a precise weighing without any dependency on temperature and reduced influence of mechanical vibrations.

From DE-A 29 49 298 there has become known a valve means for a weighing means aiming at a simplified construction of such valve means.

Another two-stage procedure for a precise weighing is known from FR-A 2 413 297, wherein a filling can be achieved by conveying material from different stocks.

The machine operation procedure, for example flow of the powder material, per each stage is adjusted manually by the operator depending on the kind of powder. Powder properties variations during operation (pourability - ISO 6186) normally adversely affect the weighing accuracy.

It is an object of the present invention to develop a new, improved weighing procedure of powder materials for air conveying packing machines with highly accurate material dosage in the final weighing stage.

It is a further object of the present invention to define a new procedure of final powder dosage for weighing at air conveying packing machines with high weighing accuracy.

Further the problem of powder property variations (pourability - ISO 6186) during operation adversely affecting the weighing accuracy requires a new technical solution.

These objects are achieved by a procedure for a precise weighing of powder materials on air conveying packing machines with a fluidization of the material in a bulk storage from which the material is packed in at least two filling stages with different quantities of flow of the material, comprising the following steps:
- rapid or rough filling of the powder material until about 85 % of the preset weight, determined by weighing, is reached,
- fine filling with a reduced flow of material until about 95 % of the preset weight, determined by weighing, is reached,
- final filling with reduced flow of material for a preset period of time or a period of time calculated in a previous filling and weighing cycle, and
- calculating from the time necessary for the final filling step a period of time for the final weighing step for reaching the preset weight for a further weighing and filling cycle.

According to a preferred embodiment of the present invention a procedure for a precise weighing of powder materials on air conveying packing machines wherein the supply of the material is controlled by presetting the quantity and time in the final dosage stage in a way that the pulse/permutation fluidization air loosens the powder material through nozzels, which material is then conveyed via a dosage valve into a bag placed on a balance, the shift of which is detected by a pneumatic measuring cell controlled by an orifice and to which pressure switches are connected, is characterized in that a reducing valve sets the desired 100 % weighing value read at a meter and an electric signal actuates a solenoid valve which 100% opens the dosage valve via a further reducing valve for achieving the rapid filling until 85 % weighing value is achieved, whereafter a pressure switch is actuated releasing a first solenoid valve, which pneumatic signal is transmitted to the dosage valve via a second solenoid valve, a third solenoid valve and a third reducing valve; in that the reducing valve sets the opening of the dosage valve at 50 % for achieving the five filling until a weighing value of 95 % is achieved, when the second pressure switch is actuated switching on the third solenoid valve and an electronic block, which controls the final filling stage via an electro-pneumatic converter, which controls the dosage valve via the solenoid valves until the 100 % weighing value is achieved, whereafter the pressure switch is actuated switching off a weighing cycle.

The inventive solution is based on the reduced and controlled powder flow (kg/s) in the final weighing stage (about 5 % of the end quantity) achieved by the preset powder quantity (determined by the existing technology) and dosage time in the final weighing stage of a filling cycle.

With the procedure according to the present invention it is possible to achieve a very high weighing accuracy of deviations in the range of less than 0,2 % of the preset weight per single measurement.

According to the present invention satisfactory results are achieved by the nozzels being arranged in two groups, where one is in a stand-by position while the other is operating, and vice versa. In this way, the fluidization is carried out in a pulse/permutation procedure. The number of nozzle arrangements as well as the number of nozzels depend on the powder grade.

Further advantageous embodiments of the inventive procedure are claimed in the further dependent subclaims.

From the following description of preferred, exemplary embodiments for realizing the process according to the present invention further characteristic features and advantages can be taken. The following description refers to the enclosed drawings, wherein: Fig.1 is a diagram showing the control of powder dosage for weighing according to the inventive procedure; Fig.2 shows weighing graphs for three different suspension poyvinylchloride resin grades; Fig.3 is a graph showing the output current of an electronic unit versus final dosage time (Δt); and Fig.4 is diagram showing the operation of the electronic unit.

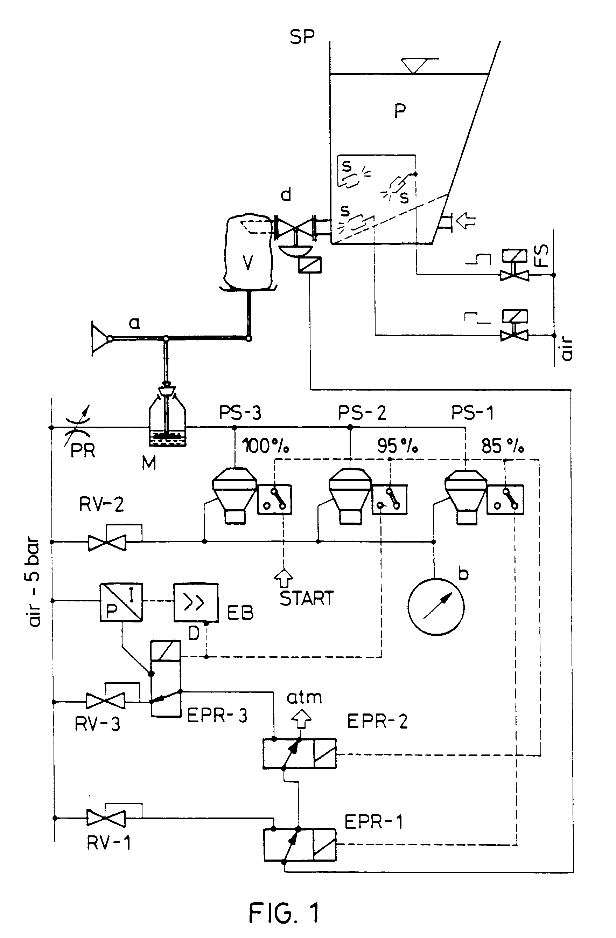

The procedure for a precise weighing of powder materials will be presented with reference to the following example. (Fig.1).

To get loose powder the fluidization air is introduced into the bulk storage (SP) through carefully arranged nozzels (S). Satisfactory results are achieved by the nozzels (S) arranged in two groups, where one is in a stand-by position while the other is operating, and vice versa. In this way, the fluidization is carried out in a pulse/permutation procedure. The number of nozzle arrangements, as well as the number of nozzels depend on the powder grade, i.e. its pourability.

As the fluidization is of a pulse type, the fluidization air pressure may considerably exceed that of the conveying air, not causing an extreme air pressure in the bulk storage. High pressure in the bulk storage can cause negative effects, like tearing of paper bags (V) used for packing, disturbances in the fine dosage procedure, etc.. High pressure during the pulse/permutation operation causes whirls, prevents the particles lumping, imparts the powder looseness, and finally its pourability. The outflow of such a powder from the bulk storage can be easily controlled and consequently a highly accurate weighing can be provided.

The weighing is made on a powder air conveying packing machine. The control diagram is shown in Fig.1.

A measuring cell (M), to which three pressure switches (PS-1, PS-2, PS-3) are connected, detects the balance (a) shift. The optimum measuring cell (M) operation within the whole measuring range is adjusted by the orifice (PR), while the desired weight value, read at the meter (b), is adjusted by a reducing valve (RV-2).

An electric signal (START) actuates a solenoid valve (EPR-1) by which the pneumatic signal is transferred from the reducing valve (RV-1) to the powder valve (d) which should fully (100%) open (rough dosage or first stage).

When about 85% of the end quantity is weighed, the pressure switch (PS-1) is actuated, the solenoid valve (EPR-1) is released, and the pneumatic signal is transmitted to the valve (d) by solenoid valves (EPR-2 and (EPR-3) and a reducing valve (RV-3).

A further pressure valve (RV-3) is selected so to get the valve (d) opening set at 50%, which reduces the flow (kg/s) of the material for the weighing.

Such reduced flow enables the dosage of about 95% of the end quantity (fine dosage or second stage), when the pressure switch (PS-2) is activated and the final dosage starts.

The 85% to 95% weight dosage with a reduced flow rate is necessary to prevent the "rough" dosage (0 - 85%) to interface with the "final" dosage (95% - 100%) operation, which would affect the weighing accuracy.

When the pressure switch (PS-2) is activated, it starts the solenoid valve (EPR-3) and an electronic unit (EB). An output signal of the electronic unit (EB) actuates an electro-pneumatic converter (I/P), which controls the powder valve (d) via the solenoid valves (EPR-2) and (EPR-3). The final weighing stage is thereby controlled by the electronic unit (EB).

When 100% weighing is achieved, the pressure switch (PS-3) is activated, the electric control signal is disabled and the weighing is completed.

At the end of the weighing step a pneumatic signal from the powder valve (d) is released to the air by the solenoid valve (EPR-2) enabling the valve to close quickly. The "amount" of the final dosage (5% of the end quantity) is determined by the pressure switches (PS-3) and (PS-2), whose different actuating points actually give the final dosage "time" and then by setting the final dosage time, the flow (kg/s) in the final weighing stage can be determined resulting in the high precision weighings.

### Electronic Unit (EB) - Application

The electronic unit (EB) is provided to keep the final dosage time within the preset time limits. The input signal for the electronic unit (EB) is the duration of the pressure switch (PS-2) operation, while the output signal controlling the powder valve (d) (Fig.1) is 4-20 mA. As the powder "quantity" (kg) and "time" (s) for the final weighing stage (95% 100%) are set up, then the powder "flow" (kg/s) is also determined. The powder flow in this final stage depends on the opening of the valve (d) (Fig.1) and the "pourability" of the powder.

The operation of the electronic unit makes the powder pourability determining the powder valve opening.

The powder pourability is determined indirectly, by using the final powder dosage time, i.e. the pressure switch (PS-2) operation time. The electronic unit (EB) detects the deviation of the "actual" time value from the "preset" time value (due to the pourability variations during operation).

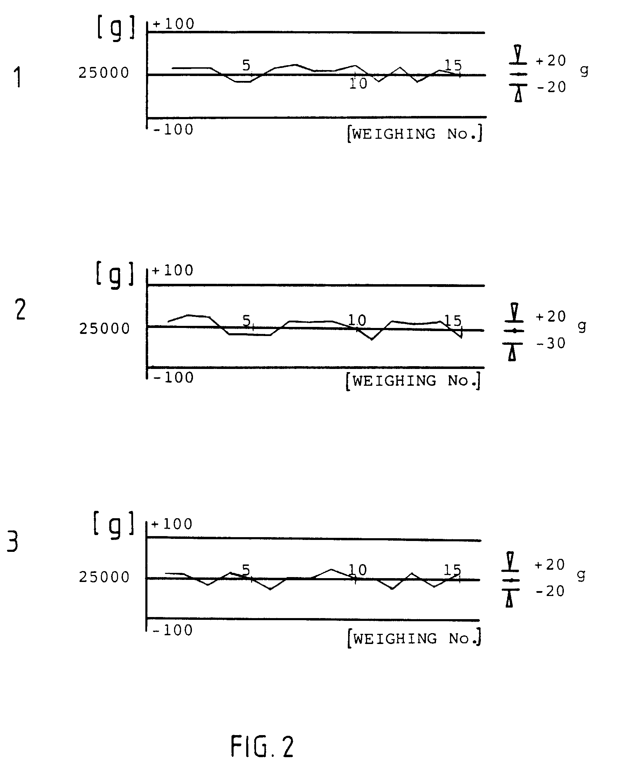

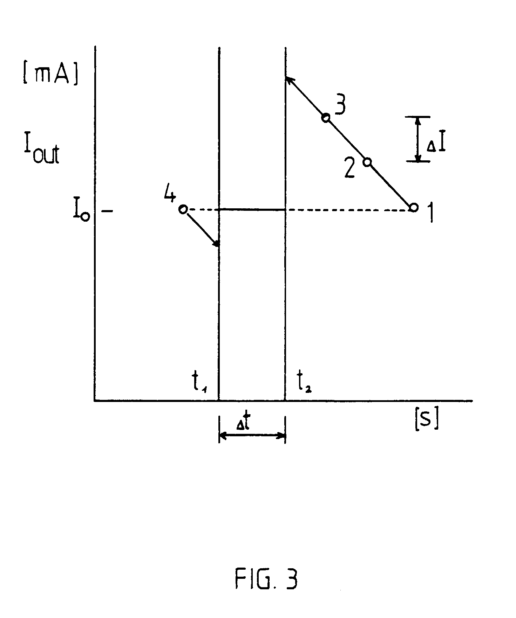

Fig.3 shows a diagram of the output current (Iₒᵤₜ) of the electronic unit versus final dosage time (Δt). If the dosage time ranges within a predetermined time range (Δt), the output current (Iₒᵤₜ) the electronic unit (EB) is of the value (Iₒ) predetermined by experience. If the actual time exceeds or does not reach the preset one, the output current (Iₒᵤₜ) is corrected by the preset value (Δt), up or down, depending on the relation of the actual time versus the preset one. If the electronic unit (EB) does not adjust the actual time to the preset time limits in the first correction, the correction is repeated with each new weighing cycle (Fig.2 points 1,2,3,4).

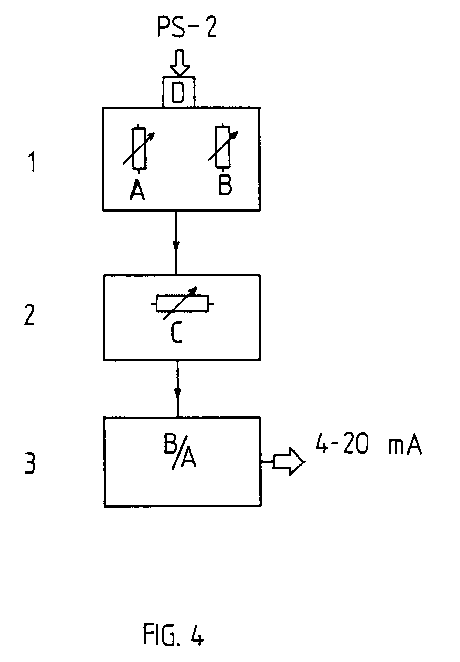

### Electronic Unit (EB) - Diagram description (Fig.4)

When the control signal from the pressure switch (PS-2) is brought onto the input (D) of the unit (1), it is activated in such a way to measure the final dosage time, whose limit values (Fig.3 - t₁ and t₂) are set up by the potentiometers (A) and (B).

The output signal of the unit (1) actuates the further unit (2) which defines the direction and amount of current correction (ΔI). The amount of current correction (Fig.3 - ΔI) is selected by a further potentiometer (C).

The processed digital signal is converted into the analogue-current one in the unit (3) which controls the powder valve (d). (Fig.1)

As is obvious for an expert the pneumatic components of the diagram of Fig. 1 can be easily replaced by electric and/or electronic components.

### Example

The above invention has been applied for the packing of suspension PVC resin into 25 kg bags. The weighing time ranged within 12 - 15 seconds, depending on the resin grade and pourability.

Resin properties:
- bulk density: 500 - 530 kg/m³
- particle size: 70 - 250 µm, average 150 µm (70 - 250 my)
- pourability: 18 - 24 s - ISO 6186

Graphs (Fig.2) show the accuracy per single weighings of the preset weight (class ≤ 0,2%) for three S-PVC resin grades (1: type S 571, 2: type S 621, 3: type S 666). It can be easily seen from Fig.2 that the variations from the desired weight of the individual bags (25 kg) is normally less than 0,1% (≤ 25g) for the individual filling and weighing cycles.

The corrections are made automatically only.

## Claims

1. Procedure for a precise weighing of powder materials (P) on air conveying packing machines with a fluidization of the material in a bulk storage (SP) from which the material (P) is packed in at least two filling stages with different quantities of flow of the material (P), comprising the following steps:
- rapid or rough filling of the powder material (P) until about 85 % of the preset weight, determined by weighing, is reached,
- fine filling with a reduced flow of material (P) until about 95 % of the preset weight, determined by weighing, is reached,
- final filling with reduced flow of material (P) for a preset period of time or a period of time calculated in a previous filling and weighing cycle, and
- calculating from the time necessary for the final filling step a period of time for the final weighing step for reaching the preset weight for a further weighing and filling cycle.

2. Procedure for a precise weighing of powder materials (8) on air conveying packing machines according to claim 1, wherein the supply of the material (P) is controlled by presetting the quantity and time in the final dosage stage in a way that the pulse/permutation fluidization air (FS) loosens the powder material (P) through nozzels (S), which material is then conveyed via a dosage valve (d) into a bag (V) placed on a balance (a), the shift of which is detected by a pneumatic measuring cell (M) controlled by an orifice (PR) and to which pressure switches (PS-1, PS-2, PS-3) are connected, characterized in that a reducing valve (RV-2) sets the desired 100 % weighing value read at a meter (b) and an electric signal (START) actuates a solenoid valve (EPR-1) which 100% opens the dosage valve (d) via a further reducing valve (RV-1) for achieving the rapid filling until 85 % weighing value is achieved, whereafter a pressure switch (PS-1) is actuated releasing a first solenoid valve (EPR-1), which pneumatic signal is transmitted to the dosage valve (d) via a second solenoid valve (EPR-2), a third solenoid valve (EPR-3) and a third reducing valve (RV-3); in that the reducing valve (RV-3) sets the opening of the dosage valve (d) at 50 % for achieving the five filling until a weighing value of 95 % is achieved, when the second pressure switch (PS-2) is actuated switching on the third solenoid valve (EPR-3) and an electronic block (EB), which controls the final filling stage via an electro-pneumatic converter (I/P), which controls the dosage valve (d) via the solenoid valves (EPR-3, EPR-2 and EPR-1) until the 100 % weighing value is achieved, whereafter the pressure switch (PS-3) is actuated switching off a weighing cycle.

3. Procedure for the precise weighing of powder materials on air conveying packing machines according to claim 2, characterized in that the electronic block (EB) processes the electric signal from the pressure switch (PS-2) brought to the input (D) of a first unit (1) measuring the final dosage time within time limits (Δt) preset by a first potentiometer (A) and a second potentiometer (B), in that the output signals activate a second unit (2), which determines the direction and value of a current correction (ΔI) selected by a third potentimeter (C), whose output signal activates a third unit (3) which converts it into an analogue-current signal controlling the dosage valve (d).

4. Procedure for the precise weighing of powder materials on air conveying packing machines according to claim 2 or 3, characterized in that the pneumatic components are at least partly replaced by electric and/or electronic components.

5. Procedure for the precise weighing of powder materials on air conveying packing machines according to any of the claims 1 to 4, characterized in that the powder materials to be packed and weighed are resins.

## Patentansprüche

1. Verfahren zum genauen Wiegen von pulverigen Materialien (P) in luftfördernden Abfüllmaschinen mit einer Fluidisierung des Materials in einem Großbehälter (SP), aus welchem das Material (P) in wenigstens zwei Füllstufen mit verschiedenen Flußmengen an Material (P) abgepackt wird, umfassend die folgenden Schritte:
- schnelles oder grobes Abfüllen des pulverigen Materials (P), bis etwa 85 % des vorgegebenen Gewichts, bestimmt durch Wiegen, erreicht wird;
- Feinabfüllen mit einem reduzierten Materialfluß (P), bis etwa 95 % des vorgegebenen Gewichts, bestimmt durch Wiegen, erreicht wird;
- abschließendes Füllen mit reduziertem Materialfluß (P) für einen vorgegebenen Zeitraum oder einen Zeitraum, welcher in einem vorhergehenden Füll- und Wägezyklus berechnet wurde, und
- Berechnen aus der für den abschließenden Füllschritt erforderlichen Zeit eines Zeitraumes für den abschließenden Wägeschritt, um das vorgegebene Gewicht für einen weiteren Wäge- und Füllzyklus zu erreichen.

2. Verfahren für ein genaues Wiegen von pulverigen Materialien (8) in luftfördernden Abfüllmaschinen nach Anspruch 1, worin die Zufuhr des Materials (P) durch Vorbestimmen der Menge und der Zeit in der Enddosierungsstufe in einer Weise gesteuert bzw. geregelt wird, daß der Puls/die Permutation von Fluidisierungsluft (FS) das pulverige Material (P) durch Düsen (S) auflockert, wobei das Material danach über ein Dosierungsventil (d) in einen Sack (V) gefördert wird, welcher auf einer Waage (a) angeordnet wird, wobei die Verlagerung derselben durch eine pneumatische Meßzelle (M) detektiert wird, welche durch eine Öffnung (PR) gesteuert ist und mit welcher Druckschalter (PS-1, PS-2, PS-3) verbunden sind, dadurch gekennzeichnet, daß ein Reduktionsventil (RV-2) den gewünschten, auf einem Meßgerät (b) abgelesenen 100 % Wägewert (p) einstellt und ein elektrisches Signal (START) ein Magnetventil (EPR-1) betätigt, welches das Dosierungsventil (d) über ein weiteres Reduktionsventil (RV-1) zu 100 % öffnet, um das schnelle Füllen zu erreichen, bis 85 % des Wägegewichts erreicht sind, worauf ein Druckschalter (PS-1) betätigt wird, welcher ein erstes Magnetventil (EPR-1) freigibt, dessen pneumatisches Signal zu dem Dosierungsventil (d) über ein zweites Magnetventil (EPR-2), ein drittes Magnetventil (EPR-3) und ein drittes Reduktionsventil (RV-3) übertragen wird, daß das Reduktionsventil (RV-3) die Öffnung des Dosierungsventils (d) auf 50 % setzt, um das Feinabfüllen zu erreichen, bis ein Wägewert von 95 % erreicht ist, wenn der zweite Druckschalter (PS-2) betätigt wird, um das dritte Magnetventil (EPR-3) und ein elektronischer Block (EB) einzuschalten, welcher die abschließende Füllstufe über einen elektropneumatischen Konverter (I/P) steuert, welcher das Dosierventil (d) über die Magnetventile (EPR-3, EPR-2 und EPR-1) steuert, bis der 100 % Wägewert erreicht wird, worauf der Druckschalter (PS-3) betätigt wird, um einen Wägezyklus auszuschalten.

3. Verfahren für ein genaues Wiegen von pulverigen Materialien in luftfördernden Abfüllmaschinen nach Anspruch 2, dadurch gekennzeichnet, daß der elektronische Block (EB) das elektrische Signal von dem Druckschalter (PS-2) verarbeitet, das zur Eingabe einer ersten Einheit (1) gebracht wird, welches die Enddosierungszeit innerhalb der Zeitgrenzen (Δt), welche durch ein erstes Pontentiometer (A) und ein zweites Potentiometer (B) voreingestellt werden, daß die Ausgabesignale eine zweite Einheit (2) aktivieren, welche die Richtung und den Wert einer Stromkorrektur (ΔI) bestimmen, welche durch ein drittes Potentiometer (C) ausgewählt wird, dessen Ausgabesignal eine dritte Einheit (3) aktiviert, welche es in ein Gleichstromsignal umwandelt, welches das Dosierungsventil (d) steuert.

4. Verfahren für ein genaues Wiegen von pulverigen Materialien in luftfördernden Abfüllmaschinen nach Anspruch 2 oder 3, dadurch gekennzeichnet, daß die pneumatischen Komponenten wenigstens teilweise durch elektrische und/oder elektronische Komponenten ersetzt werden.

5. Verfahren für ein genaues Wiegen von pulverigen Materialien in luftfördernden Abfüllmaschinen nach einem der Ansprüche 1 bis 4, dadurch gekennzeichnet, daß die zu verpackenden und zu wiegenden, pulverigen Materialien Harze sind.

## Revendications

1. Procédé pour une pesée précise de matériaux pulvérulents (P) sur des machines de remplissage à transport pneumatique, avec fluidisation du matériau dans un stockage en vrac (SP), dont le matériau (P) est emballé en au moins deux étapes de remplissage avec des débits différents du matériau (P), comprenant les étapes suivantes :
- remplissage rapide ou grossier du matériau pulvérulent (P) jusqu'à ce qu'environ 85 % du poids préfixé, déterminés par pesée, soient atteints ;
- remplissage fin avec un débit réduit de matériau (P) jusqu'à ce qu'environ 95 % du poids préfixé, déterminés par pesée, soient atteints ;
- remplissage final avec un débit réduit de matériau (P) pendant une période de temps prédéterminée ou pendant une période de temps calculée dans un cycle précédent de remplissage et de pesée ; et
- calculer à partir du temps nécessaire pour l'étape de remplissage finale une période de temps pour l'étape de pesée finale pour atteindre le poids préfixé dans un cycle ultérieur de pesée et de remplissage.

2. Procédé pour une pesée précise de matériaux pulvérulents (8) sur des machines de remplissage à transport pneumatique selon la revendication 1, dans lequel la fourniture du matériau (P) est commandée en prédéterminant la quantité et le temps dans l'étape de dosage finale de manière que l'air de fluidification par impulsions/permutations (FS) désagrège le matériau pulvérulent (P) par l'intermédiaire de buses (S), lequel matériau est ensuite transporté par l'intermédiaire d'une vanne doseuse (d) dans un sac (V) placé sur une balance (a), dont le déplacement est détecté par une cellule de mesure pneumatique (M) commandée par un orifice (PR) et à laquelle sont raccordés des interrupteurs à pression (PS-1, PS-2, PS-3), caractérisé en ce qu'un manodétendeur (RV-2) fixe la valeur de pesée désirée de 100 % lue sur un instrument de mesure (b), et en ce qu'un signal électrique (départ) actionne une électrovanne (EPR-1) qui ouvre à 100 % la vanne doseuse (d) par l'intermédiaire d'un autre manodétenteur (RV-1) pour effectuer le remplissage rapide jusqu'à ce que 85 % de la valeur de pesée soient atteints, après quoi un interrupteur à pression (PS-1) est actionné en mettant hors circuit la première électrovanne (EPR-1), lequel signal pneumatique est transmis à la vanne doseuse (d) par l'intermédiaire d'une deuxième électrovanne (EPR-2), une troisième électrovanne (EP-3) et un troisième manodétendeur (RV-3) ; en ce que le manodétendeur (RV-3) fixe l'ouverture de la vanne de doseuse (d) à 50 % pour effectuer le remplissage fin jusqu'à ce qu'une valeur de pesée de 95 % soit atteinte, lorsque le deuxième interrupteur à pression (PS-2) est actionné, mettant en circuit la troisième électrovanne (EPR-3) et un bloc électronique (EB), qui commande l'étape de remplissage final par l'intermédiaire d'un convertisseur électro-pneumatique (I/P), lequel commande la vanne doseuse (d) par l'intermédiaire des électrovannes (EPR-3, EPR-2 et EPR-1), jusqu'à ce que la valeur de pesée de 100 % soit atteinte, après quoi l'interrupteur à pression (PS-3) est actionné pour arrêter le cycle de pesée.

3. Procédé pour la pesée précise de matériaux pulvérulents sur des machines d'emballage à transport pneumatique selon la revendication 2, caractérisé en ce que le bloc électronique (EB) traite le signal électrique en provenance de l'interrupteur à pression (PS-2) amené à l'entrée (D) d'une première unité (1) mesurant le temps de dosage final à l'intérieur de limites de temps (Δt) préfixées par un premier potentiomètre (Δ) et un deuxième potentiomètre (B), en ce que les signaux de sortie activent une deuxième unité (2), qui détermine le sens et la valeur d'une correction de courant (ΔI) sélectionnée par un troisième potentiomètre (C), dont le signal de sortie active une troisième unité (3) qui le convertit en un signal de courant analogique commandant la vanne doseuse (d).

4. Procédé pour la pesée précise de matériaux pulvérulents sur des machines d'emballage à transport pneumatique selon la revendication 2 ou la revendication 3, caractérisé en ce que les composants pneumatiques sont au moins partiellement remplacés par des composants électriques et/ou électroniques.

5. Procédé pour la pesée précise de matériaux pulvérulents sur des machines de remplissage à transport pneumatique selon l'une des revendications 1 à 4, caractérisé en ce que les matériaux pulvérulents à emballer et peser sont des résines.
